# EUROPÄISCHE PATENTANMELDUNG

(11) **EP 4 485 735 A1**
(43) Veröffentlichungstag der Anmeldung: **01.01.2025**
(21) Anmeldenummer: 24184532.0
(22) Anmeldetag: 26.06.2024
(51) Int. Cl.: H02J 3/14, H02J 3/38, H02J 3/46, H02J 13/00

(54) **VERFAHREN ZUR REGELUNG EINES ENERGIEVERBANDS SOWIE EIN VERFAHREN ZUR STEUERUNG VON ZUMINDEST ZWEI ENERGIEVERBÄNDEN**

(30) Priorität: 26.06.2023 AT 505042023
(71) Anmelder: Austria Email AG, 8720 Knittelfeld (AT)
(72) Erfinder: STOCKER, Frank, 8740 Zeltweg (AT)
(74) Vertreter: SONN Patentanwälte GmbH & Co KG

(57) **Zusammenfassung**

Verfahren zur Regelung eines Energieverbands (1) mit zumindest einem regelbaren Erzeuger (2) elektrischer Energie und zumindest einem regelbaren Verbraucher (3) elektrischer Energie, wobei der zumindest eine Erzeuger (2) und der zumindest eine Verbraucher (2) über ein Stromnetz (4) miteinander elektrisch verbunden sind, wobei eine zentrale Regeleinheit (5) mit dem zumindest einen Erzeuger (2) und dem zumindest einen Verbraucher (3) verbunden ist, aufweisend die Schritte:
- Erfassen einer aktuell erzeugten elektrischen Leistung des zumindest einen Erzeugers (2) durch die zentrale Regeleinheit (5) ;
- Ermitteln einer aktuellen Leistungsaufnahme des zumindest einen Verbrauchers (3) durch die zentrale Regeleinheit(5);
- Bestimmen einer Ist-Leistungsdifferenz aus der aktuell erzeugten Leistung und der aktuellen Leistungsaufnahme durch die zentrale Regeleinheit (5); und
- Regeln des zumindest einen Verbrauchers (3) und des zumindest einen Erzeugers (2) durch die zentrale Regeleinheit (5), sodass die Ist-Leistungsdifferenz einer Soll-Leistungsdifferenz entspricht, wobei die Soll-Leistungsdifferenz mittels einer Netzleistung eines mit dem Stromnetz (4) verbundenen öffentlichen Netzes (6) ausgleichbar ist.

## Beschreibung

Die Erfindung betrifft ein Verfahren zur Regelung eines Energieverbands sowie ein Verfahren zur Steuerung von zumindest zwei Energieverbänden.

Durch den zunehmenden Anteil an erneuerbaren Energiequellen in der Energie- und Stromversorgung und die damit einhergehende größeren Anzahl an Energieerzeugern, wird es im Allgemeinen schwieriger, die Stabilität des Stromnetzes zu gewährleisten. Darüber hinaus ist eine effiziente Nutzung insbesondere der Energie aus alternativen Quellen notwendig, um die Dekarbonisierung der Energieversorgung rasch voranzutreiben. Eine Chance bietet auch in diesem Zusammenhang die Digitalisierung und die steigende Vernetzung zwischen den einzelnen Akteuren des Stromnetzes.

Beispielsweise koordinieren intelligente Stromnetze (sogenannte Smart-Grids) Erzeugung, Speicherung und Verbrauch von elektrischer Energie. Die zentrale Vernetzung erfolgt dabei durch den Einsatz von Informations- und Kommunikationstechnologien (IKT) sowie dezentral organisierter Energiemanagementsysteme zur Koordination der einzelnen Komponenten. Das bedeutet, dass in einem Smart-Grid nicht nur Energie, sondern auch Daten transportiert werden, sodass Netzbetreiber in kurzen Abständen Informationen zu Energieproduktion und -verbrauch erhalten. In der Vergangenheit hatten die Netzbetreiber keine Kenntnis darüber, wann und wo eine dezentrale Erzeugungsanlage Strom ins Netz einspeist. Wird der Anteil solcher "unkoordinierter" Erzeuger zu hoch, steigt das Risiko einer Schieflage zwischen eingespeistem und verbrauchtem Strom und letztlich von instabilen Netzzuständen. Durch die Vernetzung und die damit erhaltenen Daten können Netzbetreiber effizienteres Lastmanagement betreiben, indem beispielsweise Lasten verschoben werden. Nachteilig ist, dass keine bedarfsorientierte und/oder netzstabilisierende Regelung oder Steuerung möglich ist, sondern jeweils der gesamte aktuelle Bedarf elektrischer Energie abgedeckt werden muss und abgedeckt wird. Aufgrund der sehr hohen Anzahl an Verbrauchern und auch Stromerzeugern ist lediglich eine grobe Lenkung der Lasten möglich. Strom wird ungehindert produziert und mittels Lastverschiebung intelligent verteilt. Eine direkte Regelung von Verbrauchern durch ein Smart Grid ist beispielsweise nicht möglich.

Das Smart Grid bietet eine Vernetzung verteilter Akteure. Zusätzlich zu dieser "globalen" Vernetzung sind aus dem Stand der Technik auch Verfahren und Vorrichtungen zur effizienten lokalen Nutzung von lokal erzeugter Energie bekannt.

Beispielsweise zeigt eine Ausführungsform eines Energiemanagers "Smartfox PRO 2" der Firma DAfi GmbH das Zusammenspiel einer lokalen Energiequelle mit einer Warmwasserbereitung, durch die der Energieverbrauch optimiert wird. Der Energiemanager steuert automatisch Verbraucher innerhalb eines Haushalts mit überschüssiger Photovoltaik Energie aus einer lokalen Photovoltaik-Anlage an und steigert somit die Eigenverbrauchsquote.

Die AT 517 698 B1 zeigt beispielsweise ein Verfahren zur Steuerung einer Warmwasserbereitungsanlage mit zwei Boilern, die mit einer lokalen Stromerzeugungsvorrichtung und einer zentralen Regeleinrichtung verbunden sind.

Beispielsweise ist es möglich, einzelne Erzeuger und Verbraucher zu einem Energieverband oder als eine Energiegemeinschaft zusammenzufassen. Verbraucher und Erzeuger einer Energiegemeinschaft können mittels des allgemeinen Stromnetzes miteinander elektrisch verbunden sein und erzeugen und konsumieren elektrische Leistung gemeinschaftlich. Diese Erzeuger und Verbraucher können örtlich voneinander getrennt sein. Beispielsweise können bestimmte Verbraucher bevorzugt dann Leistung aufnehmen, wenn die Erzeuger viel elektrische Leistung liefern.

Nachteilig am Stand der Technik ist beispielsweise, dass der Verbrauch elektrischer Energie allenfalls lokal (d.h. innerhalb eines einzelnen Haushalts) an die Erzeugung angeglichen werden kann und eine aufeinander abgestimmte Regelung von örtlich getrennten Verbrauchern nicht möglich ist. Bisher ist ein Brückenschlag zwischen einer lokal optimierten Nutzung und einer globalen Vernetzung im Sinne einer global optimierten Nutzung insbesondere alternativer Energieformen nicht gelungen. Weiters nachteilig ist, dass bisherige Lösungen nicht oder nur sehr eingeschränkt auf die Interessen bspw. von Netzbetreiber gerichtet sind.

Es ist somit Aufgabe der Erfindung, die Nachteile des Stands der Technik zu lindern oder gänzlich zu beseitigen. Insbesondere ist es Aufgabe der Erfindung ein Verfahren zur Regelung eines Energieverbands sowie ein Verfahren zur Steuerung von zumindest zwei Energieverbänden bereitzustellen, die eine effiziente Nutzung von elektrischer Energie innerhalb des Energieverbands bzw. innerhalb der Energieverbände ermöglicht und somit eine Optimierung des Energieverbrauchs erlauben.

Gelöst wird die Aufgabe durch ein Verfahren zur Regelung eines Energieverbands mit zumindest einem regelbaren Erzeuger elektrischer Energie und zumindest einem regelbaren Verbraucher elektrischer Energie, wobei der zumindest eine Erzeuger und der zumindest eine Verbraucher über ein Stromnetz miteinander elektrisch verbunden sind, wobei eine zentrale Regeleinheit mit dem zumindest einen Erzeuger und dem zumindest einen Verbraucher verbunden ist, aufweisend die Schritte:
- Erfassen einer aktuell erzeugten elektrischen Leistung des zumindest einen Erzeugers durch die zentrale Regeleinheit;
- Ermitteln einer aktuellen Leistungsaufnahme des zumindest einen Verbrauchers durch die zentrale Regeleinheit;
- Bestimmen einer Ist-Leistungsdifferenz aus der aktuell erzeugten Leistung und der aktuellen Leistungsaufnahme durch die zentrale Regeleinheit; und
- Regeln des zumindest einen Verbrauchers und des zumindest einen Erzeugers durch die zentrale Regeleinheit, sodass die Ist-Leistungsdifferenz einer Soll-Leistungsdifferenz entspricht, wobei die Soll-Leistungsdifferenz mittels einer Netzleistung eines mit dem Stromnetz verbundenen öffentlichen Netzes ausgleichbar ist.

Ein regelbarer Verbraucher elektrischer Energie kann beispielsweise ein elektrischer Warmwasserbereiter (umgangssprachlich als Boiler bezeichnet) sein, dessen Leistungsaufnahme variiert und geregelt werden kann. Beispielsweise kann eine maximale Heizleistung des Warmwasserbereiters 3000 Watt betragen und die tatsächliche Leistungsaufnahme kann zwischen null Watt und der maximalen Heizleistung variiert werden. Alternativ kann der regelbare Verbraucher beispielsweise eine Batterie, eine Raumheizung, oder eine Klimaanlage aufweisen oder sein.

Der zumindest eine regelbare Erzeuger elektrischer Energie kann beispielsweise ein Wasserkraftwerk, eine Photovoltaikanlage oder ein Windkraftwerk aufweisen oder sein. Beispielsweise kann das Wasserkraftwerk ein Kleinwasserkraftwerk sein. Beispielsweise kann ein Wasserstrom durch das Kleinwasserkraftwerk geregelt werden, um die erzeugte elektrische Leistung zu regeln. Zur Regelung einer Photovoltaikanlage kann beispielsweise ein Neigungswinkel von Solarpaneelen relativ zu Sonneneinstrahlung verändert werden oder ein Wechselrichter der Photovoltaikanlage geregelt werden. Zur Regelung eines Windkraftwerks kann beispielsweise ein Anstellwinkel von Rotorblättern verändert werden.

Der zumindest eine regelbare Erzeuger und der zumindest eine regelbare Verbraucher sind über ein Stromnetz miteinander verbunden. Das Stromnetz kann beispielsweise das öffentliche Netz sein. Das Stromnetz kann alternativ mit dem öffentlichen Stromnetz verbunden sein. Beispielsweise kann das Stromnetz ein Hausnetz eines Gebäudes sein. Der zumindest eine Erzeuger und der zumindest eine Verbraucher stellen einen Energieverband dar. Ein Energieverband ist ein System, innerhalb dessen alle Akteure (d.h. Erzeuger und Verbraucher) zusammengefasst werden, die direkt miteinander elektrische Energie austauschen und dieselben Regelinteressen aufweisen. Die physische Lage der Erzeuger und Verbraucher zueinander kann einen Einfluss auf die Art des Stromnetzes haben, mit dem sie miteinander verbunden sind. Beispielsweise können weit voneinander entfernte Erzeuger und Verbraucher mittels eines Hochspannungsnetztes verbunden sein.

Erzeuger und Verbraucher des Energieverbandes sind des Weiteren mit einer zentralen Regeleinheit verbunden. Beispielsweise können Erzeuger und Verbraucher drahtlos mittels Funk, z.B. einem speziell auf IoT spezialisierten Funkstandard wie NarrowBand (NB-IoT), oder GSM mit der zentralen Regeleinheit verbunden sein. Die zentrale Regeleinheit kann beispielsweise ein Computer sein. Die zentrale Regeleinheit ist vorzugsweise auf einer virtuellen Plattform (beispielsweise in einer Cloud auf einem oder mehreren Servern) hinterlegt. Hinsichtlich der Datenübertragung zwischen dem zumindest einen Erzeuger, dem zumindest einen Verbraucher und der zentralen Regeleinheit ist deren relative Lage zueinander unerheblich. Die zentrale Regeleinheit kann Teil des Energieverbandes sein.

Eine Ausführung eines Energieverbandes kann beispielsweise vorliegen, wenn der Stromtransport zur direkten Energieübertragung zwischen dem zumindest einen Verbraucher und dem zumindest einen Erzeuger nur auf eine lokale Netzverbindung, z.B. ein internes Netz innerhalb eines Gebäudes ("Hausnetz") beschränkt ist, wodurch die beteiligten Erzeuger und Verbraucher demnach auch innerhalb des Gebäudes angeordnet sind. Diese Akteure (Erzeuger und Verbraucher) können in diesem Fall zu einem lokalen Energieverband zusammengefasst werden. Das Hausnetz ist mit dem öffentlichen Stromnetz verbunden.

Eine erweiterte Form des lokalen Energieverbandes stellt ein regionaler Energieverband dar. Hierbei ist das die beteiligten Akteure (Erzeuger und Verbraucher) verbindende Stromnetz zum direkten Energieaustausch regionaler Natur, bspw. ein städtisches Stromversorgungsnetz. Die Anordnung des zumindest einen Erzeugers und des zumindest einen Verbrauchers kann sich damit über die Ausdehnung des regionalen Stromnetzes erstrecken.

Im Gegensatz zum lokalen Energieverband, in dem der Stromtransport für den Energieaustausch zwischen Erzeuger und Verbraucher nur innerhalb des lokalen Hausnetzes und eine Einbeziehung des öffentlichen Stromnetzes nur für kompensatorische Zusatzleistungen an den Netzbetreiber erfolgt, wird im Falle des regionalen Energieverbandes das öffentliche Netz auch bereits für die Übertragung von elektrischer Leistung zwischen dem zumindest einen Erzeuger und dem zumindest einen Verbraucher herangezogen.

Eine weitere Variante eines Energieverbandes stellt ein überregionaler Energieverband dar. Das die beteiligten Akteure verbindende Stromnetz geht über die Regionalität eines Stromnetzes hinaus. Der Energieverband ist somit stromnetzübergreifend und überschreitet den regionalen Bereich. Beispielsweise kann der zumindest eine Verbraucher mit dem zumindest einen Erzeuger mittels einer Hochspannungsleitung verbunden sein.

In einem ersten Schritt des Verfahrens wird eine aktuell erzeugte elektrische Leistung des zumindest einen Erzeugers durch die zentrale Regeleinheit erfasst. Beispielsweise kann der Erzeuger dazu eingerichtet sein, die aktuell erzeugte Leistung zu bestimmen und an die Regeleinheit zu übermitteln.

Weiters wird eine aktuellen Leistungsaufnahme des zumindest einen Verbrauchers durch die zentrale Regeleinheit ermittelt. Beispielsweise kann der Verbraucher dazu eingerichtet sein, die aktuelle Leistungsaufnahme zu bestimmen und an die Regeleinheit zu übermitteln.

Im nächsten Schritt wird eine Ist-Leistungsdifferenz aus der aktuell erzeugten Leistung und der aktuellen Leistungsaufnahme durch die zentrale Regeleinheit bestimmt. Dazu kann beispielsweise eine Differenz aus dem Betrag der aktuell erzeugten Leistung und dem Betrag der aktuellen Leistungsaufnahme gebildet werden. Weist die Ist-Leistungsdifferenz in diesem Fall ein positives Vorzeichen auf, wird mehr Leistung von dem zumindest einen Erzeuger bereitgestellt als von dem zumindest einen Verbraucher aufgenommen wird. Weist die Ist-Leistungsdifferenz ein negatives Vorzeichen auf, wird vom Verbraucher mehr elektrische Leistung aufgenommen, als vom Erzeuger bereitgestellt wird. Im Falle einer Ist-Leistungsdifferenz von null wird exakt dieselbe Leistung aufgenommen wie bereitgestellt wird.

Im nächsten Schritt wird der zumindest eine Verbraucher und der zumindest eine Erzeuger durch die zentrale Regeleinheit geregelt, sodass die Ist-Leistungsdifferenz einer Soll-Leistungsdifferenz entspricht, wobei die Soll-Leistungsdifferenz mittels einer Netzleistung eines mit dem Stromnetz verbundenen öffentlichen Netzes ausgleichbar ist. Die Soll-Leistungsdifferenz kann null betragen, in diesem Fall soll die aktuell erzeugte Leistung exakt der aktuellen Leistungsaufnahme entsprechen. In diesem Fall soll demnach exakt dieselbe Leistung innerhalb des Energieverbands erzeugt wie auch verbraucht werden. Wenn die Soll-Leistungsdifferenz ungleich null ist, soll in Summe durch den Energieverband entweder elektrische Leistung in das öffentliche Stromnetz eingespeist werden (wenn die aktuell erzeugte Leistung die aktuelle Leistungsaufnahme übersteigt) oder aus dem öffentlichen Stromnetz entnommen werden (wenn die aktuelle Leistungsaufnahme die aktuelle erzeugte Leistung übersteigt). Die Soll-Leistungsdifferenz kann ein fixer Wert sein, der beispielsweise durch einen Betreiber (z.B. einen Netzbetreiber oder einen Wohnbauträger) vorgegeben wird. Die Soll-Leistungsdifferenz kann ein dynamischer Wert sein, der dynamisch an externe Bedingungen angepasst wird. Die externen Bedingungen können zeitlich variieren und sich dynamisch ändern. Die Regelung kann dynamisch erfolgen. Beispielsweise kann das erfindungsgemäße Verfahren mehrmals pro Sekunde ausgeführt werden, um dynamisch auf geänderte Bedingungen zu reagieren.

Der Energieverband kann mehrere Erzeuger und/oder mehrere Verbraucher aufweisen. Der Energieverband kann einen physischen Verbraucherpool und einen physischen Erzeugerpool aufweisen. Innerhalb dieses Verbraucher- bzw. Erzeugerpools können jeweils alle Verbraucher bzw. alle Erzeuger des Energieverbandes zusammengefasst werden.

Die zentrale Regeleinheit kann zu jedem (physischen) Verbraucher und zu jedem (physischen) Erzeuger virtuell einen digitalen Zwilling (engl. "digital twin") ablegen. Jeder Verbraucher und jeder Erzeuger kann bidirektional mit dem jeweiligen digitalen Zwilling in Verbindung stehen. Bidirektional heißt, dass sowohl geräteinterne Daten der Verbraucher und Erzeuger an den virtuellen Zwilling übertragen werden können als auch die Regelbefehle an dem zumindest einen Verbraucher und dem zumindest einem Erzeuger mittels des digitalen Zwillings exekutiert werden können.

Der zumindest eine Verbraucher kann beispielsweise ein Verbindungsmodul aufweisen, wobei das Verbindungsmodul dazu eingerichtet ist Betriebsdaten des Verbrauchers auszulesen und die Betriebsdaten an die zentrale Regeleinheit zu übermitteln, wobei das Verbindungsmodul dazu eingerichtet ist, Regelbefehle von der zentralen Regeleinheit zu erhalten und den Verbraucher entsprechend der Regelbefehle zu regeln. Die Betriebsdaten des Verbrauchers können beispielsweise die aktuelle Leistungsaufnahme des Verbrauchers beinhalten. Das Verbindungsmodul kann beispielsweise einen Prozessor aufweisen. Das Verbindungsmodul kann ein GSM Modul oder ein Modul zur Übertragung von Funkdaten auf Basis eines Funkstandards für IoT-Lösungen (wie beispielsweise NB-Iot) aufweisen, um mit der zentralen Regeleinheit bidirektional kommunizieren zu können. Die zentrale Regeleinheit kann beispielsweise einen Soll-Leistungsaufnahme aus der Soll-Leistungsdifferenz ableiten und die Soll-Leistungsaufnahme an den Verbraucher, insbesondere an das Verbindungsmodul, übermitteln. Das Verbindungsmodul kann den Verbraucher derart regeln, dass die Leistungsaufnahme des Verbrauchers der Soll-Leistungsaufnahme entspricht.

Das Verbindungsmodul kann eine selbstständige Regeleinheit bilden, die interne Regelungsvorschriften und etwaige Sollwerteinstellungen im Verbraucher ganz oder teilweise außer Kraft setzen und die Regelungsvorschriften der zentralen Regeleinheit ganz oder teilweise unabhängig von den geräteinternen Regelungsvorschriften umsetzen kann. Das Verbindungsmodul kann dazu eingerichtet sein, einen ursprünglich nicht regelbaren Verbraucher derart zu ergänzen, dass ein regelbarer Verbraucher entsteht. Der zunächst nicht regelbare Verbraucher kann dazu eingerichtet sein, mit dem Verbindungsmodul verbunden zu werden. Im Vergleich dazu kann beispielsweise ein aus dem Stand der Technik bekannter Energiemanager einen Verbraucher wie einen elektrischen Warmwasserbereiter lediglich aktivieren. Der elektrische Warmwasserbereiter würde beispielsweise so lange aufheizen, bis eine etwaige interne Regelung (bspw. mittels eines internen Thermostats) die Heizung abschaltet. Im Gegensatz dazu kann die zentrale Regeleinheit mittels des Verbindungsmoduls den elektrischen Warmwasserbereiter nicht nur aktivieren, sondern die Leistungsaufnahme regeln und beispielsweise eine Abschalttemperatur definieren. Die zentrale Regeleinheit kann entweder auf eine optionale interne Regelung des zumindest einen Verbrauchers zurückgreifen, oder aber mittels des Verbindungsmoduls die etwaige interne Regelung umgehen und mittels des Verbindungsmoduls regeln.

Der zumindest eine Verbraucher kann beispielsweise in einer Wohnung angeordnet sein und beispielsweise einer natürlichen oder juristischen Person zugeordnet sein. Das Verbindungsmodul kann beispielsweise zusätzlich mit einem Stromzähler der Wohnung und/oder mit weiteren Stromzählern in Verbindung stehen, daraus Daten auslesen und an die zentrale Regeleinheit übermitteln.

Vorzugsweise weist der zumindest eine Erzeuger ein Kommunikationsmodul auf, wobei das Kommunikationsmodul dazu eingerichtet ist Betriebsdaten aus dem Erzeuger auszulesen und die Betriebsdaten an die zentrale Regeleinheit zu übermitteln, wobei das Kommunikationsmodul dazu eingerichtet ist Regelbefehle von der zentralen Regeleinehit zu erhalten und den Erzeuger entsprechend den erhaltenen Regelbefehlen zu regeln. Die Betriebsdaten des Erzeugers können beispielsweise eine aktuell erzeugte Leistung beinhalten. Das Kommunikationsmodul kann beispielsweise einen Prozessor aufweisen. Das Kommunikationsmodul kann ein GSM Modul oder ein Modul zur Übertragung von Funkdaten auf Basis eines Funkstandards für IoT-Lösungen (wie beispielsweise NB-IoT) aufweisen, um mit der zentralen Regeleinheit bidirektional kommunizieren zu können. Die zentrale Regeleinheit kann beispielsweise eine Soll-Leistung aus der Soll-Leistungsdifferenz ableiten und die Soll-Leistung an den Erzeuger, insbesondere an das Kommunikationsmodul, übermitteln. Das Kommunikationsmodul kann den Erzeuger derart regeln, dass die erzeugte Leistung des Erzeugers der Soll-Leistung entspricht.

Beispielsweise kann das Verbindungsmodul des zumindest einen Verbrauchers und das Kommunikationsmodul des zumindest einen Erzeugers drahtlos, vorzugsweise mittels einer Funkverbindung, beispielsweise mit einem Funkstandard wie NB-IoT, insbesondere mittels einer GSM-Verbindung, mit der zentralen Regeleinheit in bidirektionaler Verbindung stehen.

Der zumindest eine Verbraucher kann beispielsweise ein Warmwasserspeicher, insbesondere ein elektrischer Warmwasserbereiter, sein. Warmwasserspeicher sind besonders gut dazu geeignet, geregelt zu werden, da deren Betrieb typischerweise keine Mindest-Leistung erfordern, sie eine verhältnismäßig große Menge an Energie speichern können und die Betriebszeiten typischerweise verhältnismäßig frei wählbar sind. Beispielsweise kann der zumindest eine Verbraucher eine Ladestation für eine Batterie, wie beispielsweise eine Ladestation für ein Elektroauto sein, dessen Batterie geladen werden kann.

Der zumindest eine Erzeuger kann beispielsweise elektrische Energie aus alternativen Energieformen, insbesondere Photovoltaik oder Windkraft, erzeugen. Beispielsweise kann der zumindest eine Erzeuger eine Photovoltaikanlage, ein Windkraftwerk oder ein Wasserkraftwerk, wie beispielsweise ein Kleinwasserkraftwerk, aufweisen. Beispielsweise kann der zumindest eine Erzeuger elektrische Energie aus Wasserstoff gewinnen.

Der Energieverband kann zumindest einen zweiten Verbraucher elektrischer Energie aufweisen, wobei eine aktuelle Leistungsaufnahme des zweiten Verbrauchers durch die zentrale Regeleinheit erfasst wird, wobei der zumindest eine Verbraucher und der zweite Verbraucher und der zumindest eine Erzeuger geregelt werden. In ähnlicher Weise kann der Energieverband zumindest einen zweiten Erzeuger elektrischer Energie aufweisen, wobei eine aktuell erzeugte Leistung des zweiten Erzeugers durch die zentrale Regeleinheit erfasst wird, wobei der zumindest eine Erzeuger und der zweite Erzeuger und der zumindest eine Verbraucher geregelt werden. Beispielsweise kann der Energieverband eine Mehrzahl an Erzeugern und eine Mehrzahl an Verbrauchern aufweisen. Die Erzeuger und die Verbraucher können beispielsweise in einem Gebäude, insbesondere in mehreren Geschossen eines mehrgeschossigen Wohnbaus, angeordnet sein. Beispielsweise kann zumindest ein Erzeuger auf einem Dach eines mehrgeschossigen Hauses angeordnet sein.

Vorzugsweise kann beim Regeln zumindest eine Nebenbedingung berücksichtigt werden. Eine Nebenbedingung kann beispielsweise eine Priorität der Versorgung eines oder mehrerer Verbraucher sein. Beispielsweise kann ein Verbraucher Vorrang gegenüber anderen Verbrauchern erhalten und somit vorranging mit elektrischer Leistung versorgt werden. Beispielsweise kann dazu die Soll-Leistungsaufnahme des priorisierten Verbrauchers im Verhältnis zu einem Bedarf des priorisierten Verbrauchers im Vergleich zu weiteren Verbrauchern höher ausfallen. Eine Nebenbedingung kann sich beispielsweise aus einer Wetterprognose ergeben. Beispielsweise kann aufgrund einer Wetterprognose, die auf eine aufkommende dichte Wolkendecke hinweist, mehr Leistung aus dem öffentlichen Stromnetz entnommen werden, um eine verringerte erzeugte Leistung durch einen Erzeuger mit einer Photovoltaikanlage zu kompensieren. Dazu kann beispielsweise eine negative Soll-Leistungsdifferenz von der zentralen Regeleinheit vorgegeben werden. Beispielsweise können sich Nebenbedingungen aus Sicherheitsvorschriften ergeben. Beispielsweise kann ein Verbraucher aus Sicherheitsgründen eine maximale Leistungsaufnahme vorgeben, die als (in diesem Fall als zwingend zu erfüllende) Nebenbedingung berücksichtigt werden kann.

Eine Nebenbedingung kann beispielsweise aus Eigeninteressen des zumindest einen Verbrauchers resultieren. Der zumindest eine Verbraucher kann beispielsweise ein elektrischer Warmwasserbereiter sein. In diesem Fall können sich Eigeninteressen des Verbrauchers beispielsweise aus einem oder mehreren der folgenden Faktoren bilden:
a) ein aktueller Betriebszustand des Warmwasserbereiters, umfassend den Ladezustand (d.h. die gespeicherte Wärmemenge im Verhältnis zur maximal speicherbaren Wärmemenge), ein daraus folgendes Ladepotential, und die vorliegende Temperatur;
b) eine individuelle Komforteinstellungen, umfassend einen Zeitpunkt und ein Ausmaß eines Warmwasserbedarfs sowie einer Mindestbeladung; und/oder
c) sonstigen individuelle Einstellungen, wie beispielsweise ein Urlaubsmodus oder eine außerplanmäßige Vollbeladung, die beispielsweise von einem Nutzer angefordert werden kann.

Eine weitere Nebenbedingung kann beispielsweise aus Eigeninteressen des zumindest einen Erzeugers resultieren. Die Eigeninteressen des Erzeugers können beispielsweise durch Betriebszustände und Daten zur Betriebssicherheit des zumindest einen Erzeugers gebildet werden.

Vorzugsweise kann der weitere Schritt vorgesehen sein:
- Erhalten von Komforteinstellungen von dem zumindest einen Verbraucher und dem zweiten Verbraucher, wobei die Komforteinstellungen eine Nebenbedingung sind. Komforteinstellungen können beispielsweise bevorzugte Einstellungen eines Nutzers beinhalten. Wenn der Verbraucher beispielsweise ein Warmwasserspeicher ist, kann der Nutzer beispielsweise einen Mindesttemperatur vorgeben, die das Wasser im Warmwasserspeicher nicht unterschreiten soll. Beispielsweise können die Komforteinstellungen einen Zeitpunkt beinhalten, an dem eine bestimmte Temperatur des Wassers im Warmwasserspeicher erreicht werden sollte.

Im Falle von zumindest zwei Verbrauchern innerhalb des Energieverbandes, die beide als elektrische Warmwasserbereiter ausgeführt sind, kann eine Strategie zur Beladung der zumindest zwei Verbraucher als Nebenbedingung berücksichtigt werden. Beispielsweise kann die Strategie zur Beladung vorsehen, dass beide Verbraucher mit der selben Leistung versorgt werden (d.h. die selbe Soll-Leistungsaufnahme erreicht werden soll). Beispielsweise kann die Strategie zur Beladung vorsehen, dass das Wasser beider Verbraucher eine minimale Temperatur erreichen soll bevor darüber hinaus beladen (d.h. geheizt) wird.

Beispielsweise kann der folgende weitere Schritt vorgesehen sein:
- Erhalten von Netzlastbedingungen des öffentlichen Netzes, wobei die Netzlastbedingungen Nebenbedingungen sind. Mittels der Netzlastbedingungen kann eine netzdienliche Regelung des Energieverbands ermöglicht werden. Beispielsweise kann mittels einer Netzlastbedingung vorgesehen werden, dass durch den Energieverband in Summe keine elektrische Leistung aus dem öffentlichen Stromnetz entnommen werden soll. Alternativ kann mittels der Netzlastbedingungen vorgesehen werden, dass in Summe beispielsweise kurzfristig elektrische Leistung in das öffentliche Stromnetz eingespeist werden soll, um das öffentliche Stromnetz kompensatorisch zu unterstützen. Die kompensatorische Unterstützung des öffentlichen Stromnetzes erfolgt mittels Bereitstellung von elektrischer Leistung an das öffentliche Stromnetz oder durch Aufnahme von elektrischer Leistung aus dem Netz. Beispielsweise kann mittels einer Netzlastbedingung vorgesehen werden, dass keine elektrische Leistung des Energieverbandes mittels des öffentlichen Stromnetzes transportiert werden soll. Beispielsweise kann (im Falle eines regionalen oder überregionalen Energieverbandes) die Soll-Leistungsaufnahme des zumindest einen Verbrauchers und eine vorgegebene aktuell erzeugte (Soll-)Leistung des zumindest einen Erzeugers auf null gesetzt werden, um das öffentliche Stromnetz nicht zu nutzen.

Die zentrale Regeleinheit kann dem zumindest einen Erzeuger und dem zumindest einen Verbraucher Regelungsvorschriften vorgeben. Die Regelungsvorschriften können zusätzliche Nebenbedingungen sein, die sich aus Betriebsbedingungen und sonstigen Einstellungen des Verbrauchers, sowie Betriebsbedingungen, Sicherheitszuständen und sonstigen Einstellungen des zumindest einen Erzeugers bzw. des zumindest einen Verbrauchers ergeben.

Ebenso gelöst wird die erfindungsgemäße Aufgabe durch ein Verfahren zur Steuerung von zumindest zwei Energieverbänden, wobei die zumindest zwei Energieverbände mit einem erfindungsgemäßen Verfahren zur Regelung eines Energieverbands geregelt werden, wobei die beiden zentralen Regeleinheiten der beiden Energieverbände mit einer übergeordneten Einheit verbunden sind, wobei die übergeordnete Einheit den beiden zentralen Regeleinheiten der beiden Energieverbänden jeweils eine Soll-Leistungsdifferenz vorgibt.

Die übergeordnete Einheit gibt den beiden zentralen Regeleinheiten der beiden Energieverbände jeweils eine Soll-Leistungsdifferenz vor, die von der jeweiligen zentralen Regeleinheit umgesetzt wird. Die zumindest zwei Energieverbände werden jeweils durch das erfindungsgemäße Verfahren zur Regelung eines Energieverbandes gemäß der vorgegebenen Soll-Leistungsdifferenz geregelt. Dieses Verfahren bietet eine sehr einfache und robuste Möglichkeit, mehrere Energieverbände zu steuern und zu koordinieren.

Vorzugsweise sind die zumindest zwei Energieverbände jeweils mit dem öffentlichen Netz verbunden, wobei die zumindest zwei Energieverbände dazu eingerichtet sind, mittels des öffentlichen Netzes wechselseitig elektrische Leistung zur Verfügung zu stellen, sodass jeder der zumindest zwei Energieverbände die jeweilige Soll-Leistungsdifferenz erreichen kann. Die jeweiligen Erzeuger und Verbraucher der beiden Energieverbände können örtlich getrennt vorliegen. Die übergeordnete Einheit kann drahtlos mittels Funk, beispielsweise mit einem speziell für IoT spezialisierten Funkstandard (wie NB-IoT), GSM oder über das Internet mit den beiden zentralen Regeleinheiten verbunden sein. Beispielsweise kann einer der Energieverbände eine erste Soll-Leistungsdifferenz von der übergeordneten Einheit erhalten, während der andere Energieverband eine zweite Soll-Leistungsdifferenz erhält, wobei eine Summe aus der ersten und der zweiten Soll-Leistungsdifferenz null ergibt. Es ist somit möglich, dass die beiden Energieverbände einander wechselseitig elektrische Leistung bereitstellen und somit in Bezug auf deren erzeugte und verbrauchte Leistung aufeinander abgestimmt agieren können. Die von der übergeordneten Einheit vorgegebenen Soll-Leistungsdifferenzen werden durch die Regelung der einzelnen Verbraucher und Erzeuger erreicht. Die übergeordnete Einheit kann Informationen mit einem Netzbetreiber des öffentlichen Netzes austauschen. Beispielsweise kann der Netzbetreiber Nebenbedingungen für die einzelnen Regeleinheiten oder auch für die Bestimmung der Soll-Leistungsdifferenzen vorgeben.

Beispielsweise kann die Soll-Leistungsdifferenz aus Soll-Leistungsanforderungen der Nebenbedingungen gebildet werden, wobei sich die Soll-Leistungsanforderungen aus den jeweiligen aktuellen Ist-Leistungsanforderungen der Nebenbedingungen ergeben.

Die vorliegende Erfindung wird anhand der beigefügten Figuren näher erläutert. Darin zeigen:
Fig. 1 einen Energieverband mit einer zentralen Regeleinheit; und
Fig. 2 zwei miteinander verbundene Energieverbände, die mittels einer übergeordneten Einheit gesteuert werden.

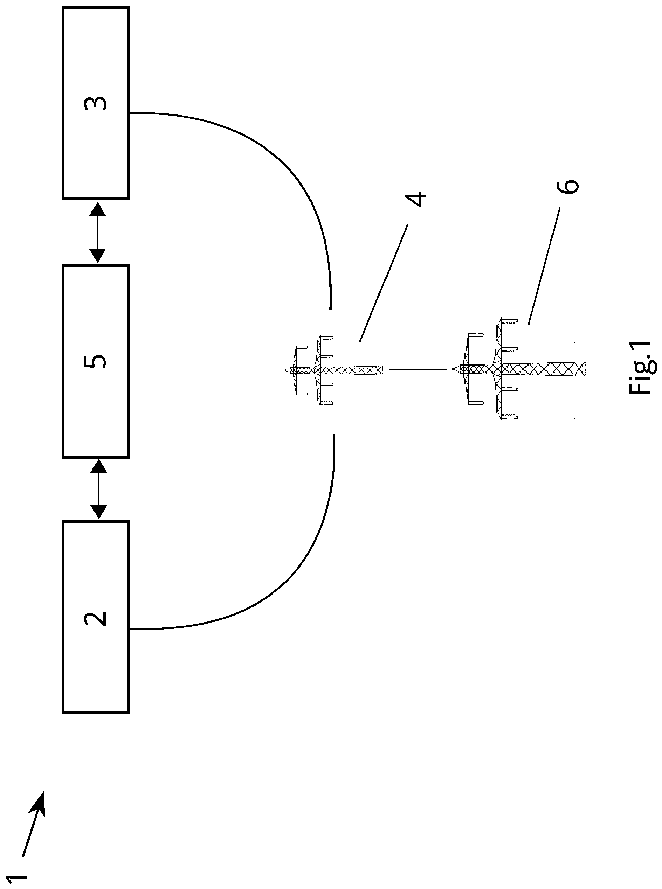

Figur 1 zeigt einen Energieverband 1 mit einem regelbaren Erzeuger 2 elektrischer Energie und einem regelbaren Verbraucher 3 elektrischer Energie. Alternativ zu der dargestellten Ausführungsform kann der Energieverband zwei oder mehrere regelbare Verbraucher 3 und/oder zwei oder mehrere regelbare Erzeuger 2 aufweisen. Der Verbraucher 3 ist in dieser beispielhaften Ausführung ein elektrischer Warmwasserbereiter und der Erzeuger 2 weist eine Photovoltaikanlage auf. Der Erzeuger 2 und der Verbraucher 3 sind über ein Stromnetz 4 miteinander elektrisch verbunden, wobei eine zentrale Regeleinheit 5 mit dem Erzeuger 2 und dem Verbraucher 3 verbunden ist. Zur Regelung des Energieverbandes 1 sind die folgenden Schritte vorgesehen:
- Erfassen einer aktuell erzeugten elektrischen Leistung des zumindest einen Erzeugers 2 durch die zentrale Regeleinheit 5;
- Ermitteln einer aktuellen Leistungsaufnahme des zumindest einen Verbrauchers 3 durch die zentrale Regeleinheit 5;
- Bestimmen einer Ist-Leistungsdifferenz aus der aktuell erzeugten Leistung und der aktuellen Leistungsaufnahme durch die zentrale Regeleinheit 5; und
- Regeln des zumindest einen Verbrauchers 3 und des zumindest einen Erzeugers 2 durch die zentrale Regeleinheit 5, sodass die Ist-Leistungsdifferenz einer Soll-Leistungsdifferenz entspricht, wobei die Soll-Leistungsdifferenz mittels einer Netzleistung eines mit dem Stromnetz 4 verbundenen öffentlichen Netzes 6 ausgleichbar ist. Gemäß dieser beispielhaften Ausführung sind der regelbare Erzeuger 2 und der regelbare Verbraucher 3 innerhalb eines mehrgeschossigen Wohnbaus (nicht dargestellt) angeordnet. Der Erzeuger 2 befindet sich auf einem Dach des Wohnbaus und der Verbraucher 3 befindet sich in einer Wohneinheit des Wohnbaus. Somit ist das Stromnetz 4 ein Hausnetz des mehrgeschossigen Wohnbaus, wobei das Hausnetz mit dem öffentlichen Netz 6 elektrisch verbunden ist. Alternativ dazu können Erzeuger 2 und Verbraucher 3 über ein öffentliches städtisches Stromnetz miteinander verbunden sein, sodass das öffentliche (städtische) Netz 6 das Stromnetz 4 beinhaltet.

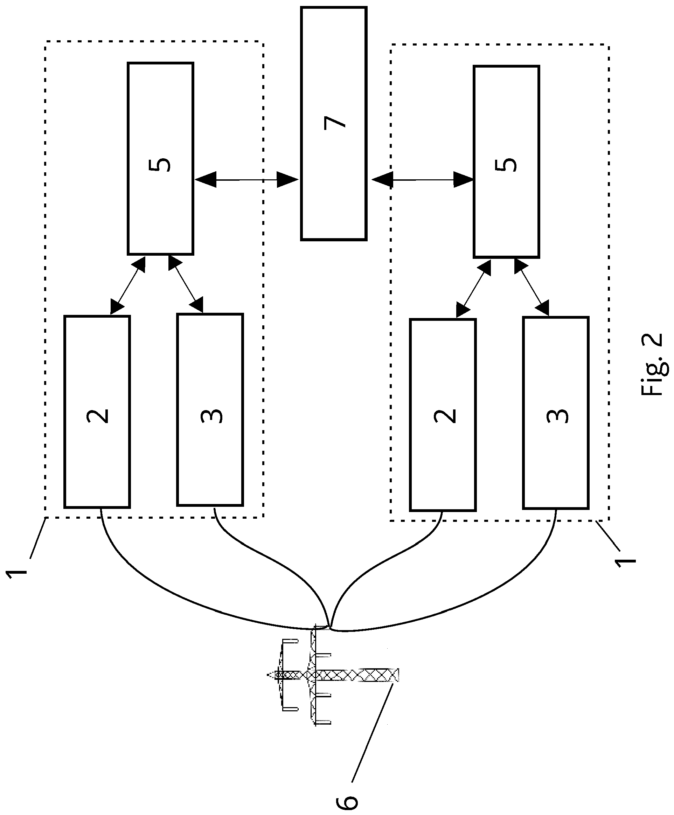

Figur 2 zeigt zwei Energieverbände 1 (vgl. Fig. 1), die jeweils mittels des erfindungsgemäßen Verfahrens zur Regelung eines Energieverbandes 1 geregelt werden können. Im Gegensatz zu der Ausführungsform in Figur 1, sind die Erzeuger 2 und Verbraucher 3 der einzelnen Energieverbände 1 mittels des öffentlichen Netzes 6 verbunden, das in diesem Ausführungsbeispiel auch als Stromnetz 4 fungiert. Die beiden zentralen Regeleinheiten 5 sind jeweils Teil eines der beiden Energieverbände 1 und sind jeweils mit einer übergeordneten Einheit 7 verbunden. Die übergeordnete Einheit 7 gibt den beiden zentralen Regeleinheiten 5 der beiden Energieverbänden 1 jeweils eine Soll-Leistungsdifferenz vor. Die übergeordnete Einheit 7 ist in diesem Fall auf einer virtuellen Plattform in Form einer Cloud hinterlegt. Die zwei Energieverbände 1 sind jeweils mit dem öffentlichen Netz 6 verbunden, wobei die zwei Energieverbände 1 dazu eingerichtet sind, mittels des öffentlichen Netzes 6 wechselseitig elektrische Leistung zur Verfügung zu stellen, sodass jeder der zumindest zwei Energieverbände die jeweilige Soll-Leistungsdifferenz erreichen kann. Die übergeordnete Einheit 7 steuert somit die zentralen Regeleinheiten 5, die wiederum die einzelnen Erzeuger 2 und Verbraucher 3 der Energieverbände 1 regeln. Durch die Zusammenfassung von regelbaren Verbrauchern 3 und regelbaren Erzeugern 2 zu Energieverbänden 1, die mittels den zentralen Regeleinheiten der Energieverbände geregelt werden, ist es möglich eine große Anzahl an Verbrauchern 3 und Erzeugern 2 zu steuern und somit den Verbrauch und die Erzeugung elektrischer Energie über weite Strecken aufeinander abzustimmen.

## Patentansprüche

1. Verfahren zur Regelung eines Energieverbands (1) mit zumindest einem regelbaren Erzeuger (2) elektrischer Energie und zumindest einem regelbaren Verbraucher (3) elektrischer Energie, wobei der zumindest eine Erzeuger (2) und der zumindest eine Verbraucher (2) über ein Stromnetz (4) miteinander elektrisch verbunden sind, wobei eine zentrale Regeleinheit (5) mit dem zumindest einen Erzeuger (2) und dem zumindest einen Verbraucher (3) verbunden ist, aufweisend die Schritte:
- Erfassen einer aktuell erzeugten elektrischen Leistung des zumindest einen Erzeugers (2) durch die zentrale Regeleinheit (5) ;
- Ermitteln einer aktuellen Leistungsaufnahme des zumindest einen Verbrauchers (3) durch die zentrale Regeleinheit(5);
- Bestimmen einer Ist-Leistungsdifferenz aus der aktuell erzeugten Leistung und der aktuellen Leistungsaufnahme durch die zentrale Regeleinheit (5); und
- Regeln des zumindest einen Verbrauchers (3) und des zumindest einen Erzeugers (2) durch die zentrale Regeleinheit (5), sodass die Ist-Leistungsdifferenz einer Soll-Leistungsdifferenz entspricht, wobei die Soll-Leistungsdifferenz mittels einer Netzleistung eines mit dem Stromnetz (4) verbundenen öffentlichen Netzes (6) ausgleichbar ist.

2. Verfahren nach Anspruch 1, **dadurch gekennzeichnet, dass** der zumindest eine Verbraucher (3) ein Verbindungsmodul aufweist, wobei das Verbindungsmodul dazu eingerichtet ist Betriebsdaten des Verbrauchers auszulesen und die Betriebsdaten an die zentrale Regeleinheit (5) zu übermitteln, wobei das Verbindungsmodul dazu eingerichtet ist Regelbefehle von der zentralen Regeleinheit (5) zu erhalten und den Verbraucher (3) entsprechend der Regelbefehle zu regeln.

3. Verfahren nach einem der Ansprüche 1 oder 2, **dadurch gekennzeichnet, dass** der zumindest eine Erzeuger (2) ein Kommunikationsmodul aufweist, wobei das Kommunikationsmodul dazu eingerichtet ist Betriebsdaten aus dem Erzeuger (2) auszulesen und die Betriebsdaten an die zentrale Regeleinheit (5) zu übermitteln, wobei das Kommunikationsmodul dazu eingerichtet ist Regelbefehle von der zentralen Regeleinehit zu erhalten und den Erzeuger (2) entsprechend den erhaltenen Regelbefehlen zu regeln.

4. Verfahren nach den Ansprüchen 2 und 3, **dadurch gekennzeichnet, dass** das Verbindungsmodul des zumindest einen Verbrauchers und das Kommunikationsmodul des zumindest einen Erzeugers (2) drahtlos, vorzugsweise mittels einer Funkverbindung, insbesondere mittels einer GSM-Verbindung, mit der zentralen Regeleinheit (5) in bidirektionaler Verbindung steht.

5. Verfahren nach einem der Ansprüche 1 bis 4, **dadurch gekennzeichnet, dass** der zumindest eine Verbraucher (3) ein Warmwasserspeicher, insbesondere ein elektrischer Warmwasserbereiter, ist.

6. Verfahren nach einem der Ansprüche 1 bis 5, **dadurch gekennzeichnet, dass** der zumindest eine Erzeuger (2) elektrische Energie aus alternativen Energieformen, insbesondere Photovoltaik oder Windkraft, erzeugt.

7. Verfahren nach einem der Ansprüche 1 bis 6, **dadurch gekennzeichnet, dass** der Energieverband (1) zumindest einen zweiten Verbraucher elektrischer Energie aufweist, wobei eine aktuelle Leistungsaufnahme des zweiten Verbrauchers durch die zentrale Regeleinheit erfasst wird, wobei der zumindest eine Verbraucher (3) und der zweite Verbraucher und der zumindest eine Erzeuger (2) geregelt werden.

8. Verfahren nach einem der Ansprüche 1 bis 7, **dadurch gekennzeichnet, dass** beim Regeln zumindest eine Nebenbedingung berücksichtigt wird.

9. Verfahren nach den Ansprüchen 7 und 8, aufweisend den weiteren Schritt:
- Erhalten von Komforteinstellungen von dem zumindest einen Verbraucher (3) und dem zweiten Verbraucher, wobei die Komforteinstellungen eine Nebenbedingung sind.

10. Verfahren nach einem der Ansprüche 8 oder 9, **gekennzeichnet durch** den weiteren Schritt:
- Erhalten von Netzlastungsbedingungen des öffentlichen Netzes, wobei die Netzlastbedingungen Nebenbedingungen sind.

11. Verfahren zur Steuerung von zumindest zwei Energieverbänden (1), wobei die zumindest zwei Energieverbände (1) mit einem Verfahren nach einem der Ansprüche 1 bis 10 geregelt werden, **dadurch gekennzeichnet, dass** die beiden zentralen Regeleinheiten (5) der beiden Energieverbände (1) mit einer übergeordneten Einheit (7) verbunden sind, wobei die übergeordnete Einheit (7) den beiden zentralen Regeleinheiten (5) der beiden Energieverbänden (1) jeweils eine Soll-Leistungsdifferenz vorgibt.

12. Verfahren nach Anspruch 11, **dadurch gekennzeichnet, dass** die zumindest zwei Energieverbände (1) jeweils mit dem öffentlichen Netz (7) verbunden sind, wobei die zumindest zwei Energieverbände (1) dazu eingerichtet sind, mittels des öffentlichen Netzes (7) wechselseitig elektrische Leistung zur Verfügung zu stellen, sodass jeder der zumindest zwei Energieverbände (1) die jeweilige Soll-Leistungsdifferenz erreichen kann.
